# Europäisches Patentamt
# European Patent Office
# Office européen des brevets

(19)

(11) Publication number: **0 043 696**
**B1**

(12)

# EUROPEAN PATENT SPECIFICATION

(45) Date of publication of patent specification: **14.03.84**

(51) Int. Cl.³: **A 47 J 31/54**

(21) Application number: **81302991.5**

(22) Date of filing: **01.07.81**

(54) Apparatus for dispensing liquid for dissolving and/or dispersing solid material.

(30) Priority: **03.07.80 GB 8021791**

(43) Date of publication of application:
**13.01.82 Bulletin 82/2**

(45) Publication of the grant of the patent:
**14.03.84 Bulletin 84/11**

(84) Designated Contracting States:
**CH DE FR GB IT LI**

(56) References cited:
**GB - A - 1 205 612**
**US - A - 2 835 782**
**US - A - 3 007 609**
**US - A - 3 915 341**
**US - A - 3 921 855**

(73) Proprietor: **Mars Limited**
**143-149 Fenchurch Street**
**London EC3M 6BN (GB)**

(72) Inventor: **Jones, Elfed**
**11 William Ellis Close**
**Old Windsor Windsor Berks (GB)**

(74) Representative: **Colgan, Stephen James**
**CARPMAELS & RANSFORD 43 Bloomsbury Square**
**London WC1A 2RA. (GB)**

Courier Press, Leamington Spa, England.

## Apparatus for dispensing liquid for dissolving and/or dispersing solid material

This invention relates to apparatus for dissolving and/or dispersing solid material, particularly, though not exclusively, such apparatus for dispensing discrete portions of liquid, for instance for human consumption.

In apparatus for dispensing drinks, for instance tea, coffee, chocolate, soft drinks or soups, liquid is added to a container which contains solid particulate material which then dissolves and/or disperses in the liquid. In order that the dispensing cycle shall be as short as possible, it is highly desirably that the solution and/or dispersion of the solid material shall be as rapid as possible.

In such apparatus for dispensing drinks it is important that the solids are completely dissolved and/or dispersed in the liquid in order to gain maximum flavour from the drink and to provide maximum economies in the avoidance of waste solids not used efficiently in the preparation of the drink.

This invention relates particularly, though not exclusively, to a drinks preparation concept known as the in-cup system whereby the solids are previously placed into a beverage container in pre-measured portions and are subsequently converted to drinks by the addition of the liquid in the dispensing apparatus.

In our experience it is highly desirable that the addition of the liquid to the solids is controlled in a manner such that the timing of the operation, the flow pattern of the liquid in the beverage container and the volumetric flow rate of the liquid are of particular importance in achieving a well dissolved and/or dispersed drink.

In such apparatus it is normal to use hot water storage tank of such capacity to provide a sufficient reservoir of hot drinking water that can be easily dispensed into the drinking vessel at a suitable time in the dispensing cycle.

In such reservoirs the hottest water rests at the top of the reservoir and it is normal practice to take the water from the top rather than the bottom of the reservoir. In one form of apparatus currently employed in in-cup beverage dispensing machines, a supply tube is provided within the reservoir leading downwardly from near the top of the reservoir, and only issues from the reservoir at the base — where it leads to an on/off supply valve and to an outlet nozzle adjacent and directly above the cup-filling station.

In such an apparatus, with the valve towards the base of the supply tube, the first aliquot of liquid supplied to the cup or container holding the solid material is that held within the tube above the valve. It is only when this is exhausted that the hottest water from the top of the reservoir is able to reach the cup. Not only does this mean that the overall temperature of the water supplied to the cup is slightly lower than desired, but also (because of the siting of the supply valve) the flow pattern and volumetric flow rate of the water is not as good as could be desired.

We have now designed an apparatus for dispensing liquid for dissolving and/or dispersing solid material which has an improved efficiency of dissolution and/or dispersion and which, moreover provides portions of liquid of overall temperature slightly higher than that of the system described above. This has been achieved by siting the supply valve near the top of the reservoir and providing the supply tube as a substantially straight drop unimpeding liquid flow from the valve to the outlet directly above the cup or container. The relative dimensions of the valve and tube are designed such that the hot water from the top of the reservoir is, when the valve opens "dumped" rapidly into the tube from whence it flows quickly by laminar flow directly into the cup or container.

According to the invention there is provided an apparatus for dispensing liquid for dissolving and/or dispersing solid material, which comprises a reservoir for said liquid, a supply tube leading from substantially the top of said reservoir to an outlet above a position at which said solid material is to be dissolved and/or dispersed, an on/off supply valve disposed at the top of the tube adjacent the top of the reservoir, said tube extending from said valve to said outlet substantially vertically downwardly in a straight line, and an air inlet means provided at said valve at the top of the tube for venting the downstream side of the valve and the whole of the tube whereby liquid passed from the said downstream side through the tube at atmospheric pressure, the dimensions of the valve and tube being chosen such that liquid, at the operating temperature of the apparatus, will flow in a laminar fashion through the tube.

US-A-3 915 341 discloses a hot beverage dispenser wherein water is dispensed from the top of a water reservoir, through a valve, through a supply tube (34) sloping downwardly to a mixing bowl. Part of the supply tube is vented to atmospheric, for the purpose of ensuring that water does not remain in the tube. The top portion of the tube and downstream portion of the valve are not however vented. The rate of liquid flow will be determined by the flow rate through this top portion and will be relatively slow as compared to the flow rates achieved in the apparatus of the present invention.

The apparatus is of particular benefit for use in in-cup beverage dispensing machines although it is not restricted to this utility. Furthermore, although the invention will be described with reference to the supply of hot water, it is not restricted in its application to this liquid and other liquids or cold water could be employed.

Preferred features of the invention will now be described with reference to the accompanying drawings, given by way of example, which shows in schematic cross-section an apparatus of the invention installed in an in-cup beverage dispensing machine.

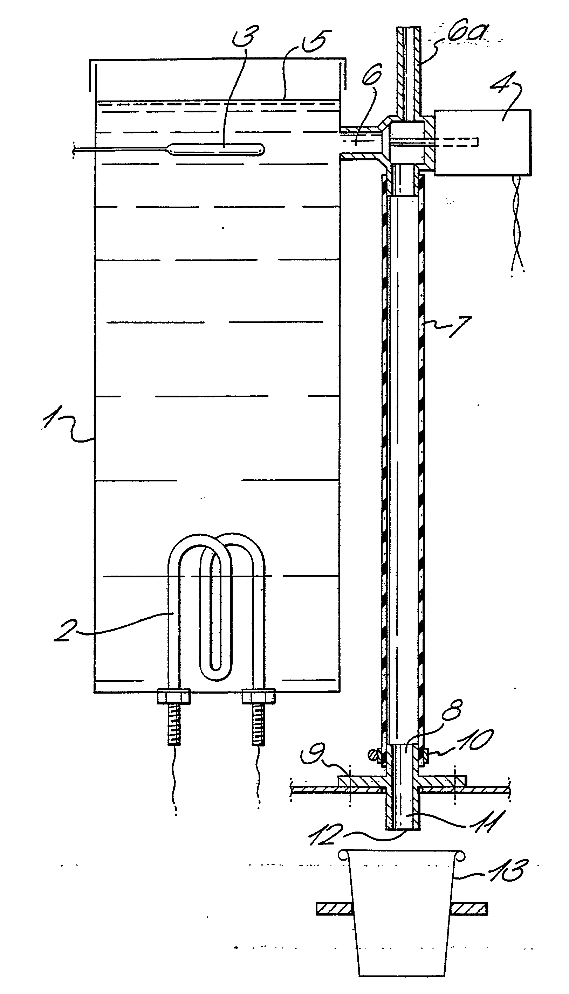

Referring to the drawing, the apparatus comprises a hot water tank 100 mm by 120 mm in cross section by 460 mm in height. This hot water tank is fitted with an electric immersion heater 2 at the lower end of sufficient capacity to raise the water temperature from normal ambient levels to normal acceptable drinking water temperatures of approximately 75°C in a commercially acceptable time. The hot water tank is fitted with an electrically operated thermostat 3. The immersion heater is rated such that four drinks per minute can be withdrawn from this hot water tank for at least eight minutes without a significant drop in water temperature supplied to the drinking vessel during that time. The hot water tank is fitted with an electrically controlled solenoid driven water valve 4 which is mounted 350 mm above the base of the tank. The water level 5 in the tank is controlled by a device which would normally be some form of float operated switch that would maintain the water level some 50 mm above this water exit point.

The hottest part of the water reservoir is situated at the top of the tank and this is a result of natural physical principles. The water valve is fitted with a clear opening 6 of 12 mm providing an uninterrupted flow of liquid through the valve when open and a breather tube 6a to atmosphere. Downstream of the valve is fitted a supply tube 7 which would normally be made of silicone rubber to prevent microbiological growth and which has internal dimensions of 8—10 mm. The liquid flows through an uninterrupted length of hose for a vertical distance of approximately 400 mm until it reaches a conveniently mounted water nozzle 8 which is secured by a bulk head fitting 9 in a secure position. This nozzle would normally be fastened to the hose using the expandable properties of the silicone rubber or could be fitted with a hose clip 10 to prevent any spillage. The nozzle exit diameter 11 is shown to be most suitable in the region of 7 mm diameter and with a square cut exit 12 to the nozzle giving maximum concentration of liquid jet. In this configuration the distance vertically from the exit of the nozzle to the base of the drinking vessel is approximately 130 mm providing minimum distance for the water jet to spread and lose concentration.

This configuration of top exit water valves, smooth flow of uninterrupted hose and nozzle assembly very close to the drinking vessel provides the maximum combination of uninterrupted liquid flow from the most suitable portion of the hot water tank to the cup with minimum drop in drinking water temperature and with maximum laminar flow. The end result is that a beverage of 175 ml is filled in a time between 1.2 and 1.5 seconds which is critical for the success of the operation.

Because of the laminar flow of the water, it moves like a solid tube and gives a particularly good effect on the solubility or dispersibility of the ingredients in the drinking vessel. The apparatus for supporting the drinking vessel 13 must be adjustable and repeatable such that the liquid jet is dispensed into the drinking vessel and strikes centrally on the base of the cup to provide maximum benefit. After adjustment the drinking vessel position can be secured and maintained during its working life.

**Claims**

1. An apparatus for dispensing liquid for dissolving and/or dispersing solid material, which comprises a reservoir (1) for said liquid, a supply tube (7) leading from substantially the top of said reservoir (1) to an outlet (11) above a position (13) at which said solid material is to be dissolved and/or dispersed, an on/off supply valve (4) disposed at the top of the tube (7) adjacent the top of the reservoir (1), said tube (7) extending from said valve (4) to said outlet (11) substantially vertically downwardly in a straight line, and an air inlet means (6a) provided at said valve (4) at the top of the tube (7) for venting the downstream side of the valve (4) and the whole of the tube (7) whereby liquid passes from the said downstream side through the tube (7) at atmospheric pressure, the dimensions of the valve (4) and tube (7) being chosen such that liquid, at the operating temperature of the apparatus, will flow in a laminar fashion through the tube (7).

2. An apparatus according to claim 2 wherein the air inlet means (6a) comprises a breather tube on said valve (4).

**Revendications**

1. Un appareil de distribution de liquide destiné à dissoudre et/ou disperser de la matière solide, caractérisé en ce qu'il comprend un réservoir (1) pour ledit liquide, un tube d'alimentation (7) menant sensiblement du sommet dudit réservoir (1) à une sortie (11) située au-dessus de l'emplacement (13) auquel ladite matière solide doit être dissoute et/ou dispersée, une vanne d'alimentation marche/arrêt (4) située au sommet du tube (7) près du sommet du réservoir (1), ledit tube s'étendant de ladite vanne (4) à ladite sortie (11) sensiblement verticalement vers le bas en ligne droite, et un moyen d'entrée d'air (6a) prévu au niveau de ladite vanne (4) au sommet du tube (7) pour mettre à l'évent le côté aval de la vanne (4) et l'ensemble du tube (7) de façon que le liquide traverse le tube (7) à partir dudit côté aval sous pression atmosphérique, les dimensions de la vanne (4) et du tube (7) étant choisies telles que le liquide s'écoule, à la température de fonctionnement de l'appareil, en régime laminaire à travers le tube (7).

2. Un appareil selon la revendication 2 caractérisé en ce que le moyen d'entrée d'air (6a) est constitué par un tube renifleur sur ladite vanne (4).

## Patentansprüche

1. Vorrichtung zur Abgabe einer Flüssigkeit zum Auflösen und/oder Dispergieren von Feststoffmaterial, mit einem Reservoir (1) für die Flüssigkeit, einem Zufuhrrohr (7), welches im wesentlichen von der Oberseite des Reservoirs (1) zu einem Auslaß (11) über einem Punkt (13) führt, an welchem das Feststoffmaterial aufgelöst und/oder dispergiert werden soll, einem Ein/Aus-Zufuhrventil (4), welches an der Oberseite des Rohres (7) im Bereich des oberen Endes des Reservoirs (1) angeordnet ist und von welchem sich das Rohr (7) zu dem Auslaß (11) in einer geraden Linie im wesentlichen senkrecht nach unten forterstreckt, sowie einer Lufteinlaßvorrichtung (6a), die an dem Ventil (4) an dem oberen Ende des Rohres (7) vorgesehen ist zum Lüften der Abströmseite des Ventils (4) und des gesamten Rohres (7), wodurch Flüssigkeit bei atmosphärischem Druck von der Abströmseite durch das Rohr (7) strömt, wobei die Abmessungen des Ventils (4) und des Rohres (7) so gewählt sind, daß die Flüssigkeit bei der Betriebstemperatur der Vorrichtung laminar durch das Rohr (7) strömt.

2. Vorrichtung nach Anspruch 1, bei welcher die Lufteinlaßvorrichtung (6a) ein Lüftungsrohr auf dem Ventil (4) enthält.